(19) **Europäisches Patentamt**
**European Patent Office**
**Office européen des brevets**

(11) **EP 4 772 795 A1**

(12) **EUROPEAN PATENT APPLICATION**
published in accordance with Art. 153(4) EPC

(43) Date of publication:
08.07.2026 Bulletin 2026/28

(21) Application number: 24871047.7

(22) Date of filing: 27.09.2024

(51) International Patent Classification (IPC):
F23D 14/14 (2006.01)    F23D 14/02 (2006.01)
F23D 14/82 (2006.01)    A47J 37/06 (2006.01)
A47J 36/30 (2006.01)

(52) Cooperative Patent Classification (CPC):
A47J 36/30; A47J 37/06; F23D 14/02; F23D 14/14;
F23D 14/82

(86) International application number:
PCT/CN2024/122032

(87) International publication number:
WO 2025/067512 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023  CN 202311272516
28.09.2023  CN 202311272286
28.09.2023  CN 202322653402 U

(71) Applicant: Guangdong Midea Kitchen Appliances
Manufacturing Co., Ltd.
Foshan, Guangdong 528311 (CN)

(72) Inventors:
• ZHANG, Bi
Foshan, Guangdong 528311 (CN)

• LI, Jiarui
Foshan, Guangdong 528311 (CN)
• LIU, Wen
Foshan, Guangdong 528311 (CN)
• MU, Bin
Foshan, Guangdong 528311 (CN)
• SUN, Yanjun
Foshan, Guangdong 528311 (CN)
• FEI, Yumin
Foshan, Guangdong 528311 (CN)
• ZOU, Chun
Foshan, Guangdong 528311 (CN)
• YANG, Yingju
Foshan, Guangdong 528311 (CN)

(74) Representative: RGTH
Patentanwälte PartGmbB
Mönckebergstraße 11
20095 Hamburg (DE)

(54) **BURNER AND COOKING APPLIANCE**

(57) A burner includes a main body (110), a burning mesh assembly (120) and a flashback resistant assembly (130). The main body (110) includes a gas receiving cavity (111) configured to receive a combustible gas; where an opening of the gas receiving cavity faces towards the burning mesh assembly to enable the combustible gas to burn on a surface of the burning mesh assembly. The burning mesh assembly faces towards an outside to radiate thermal energy to the outside. The flashback resistant assembly (130) is configured to prevent flames on the burning mesh assembly from entering the gas receiving cavity.

FIG. 8

**Description**

**CROSS-REFERENCE TO RELATED APPLICATION**

This application is based on and claims priority to Chinese patent application No. 202311272516.7, filed on September 28, 2023, the entire contents of which are incorporated herein by reference.

This application is based on and claims priority to Chinese patent application No. 202311272286.4, filed on September 28, 2023, the entire contents of which are incorporated herein by reference.

This application is based on and claims priority to Chinese patent application No. 202322653402.9, filed on September 28, 2023, the entire contents of which are incorporated herein by reference.

**FIELD**

The present disclosure relates to the field of cooking apparatus technologies, and more particularly, to a burner and a cooking appliance.

**BACKGROUND**

A Chinese patent document with publication number CN113701155B discloses a burner, whose burning surface is composed of a ceramic plate. Fully premixed fuel gas burns on the ceramic plate, and the ceramic plate generates radiant heat after being heated. The ceramic plate has a thickness of more than 10 mm and has a through hole penetrating the ceramic plate in a thickness direction. Flames burn on a single through hole. When a diameter of the through hole is smaller than a specific diameter, occurrence of a dynamic flame flashback can be prevented. By virtue of the thickness of more than 10 mm of the ceramic plate and favorable high thermal resistance performance of ceramic itself, the burning surface of the ceramic plate blocks heat transfer from a burning side to a side of a premixing and distribution chamber, to prevent occurrence of a static flashback. However, the ceramic plate is prone to cracking and slagging, and has poor impact resistance. Also, an overall manufacturing process of the burner is complicated, and the thickness of the burning surface is relatively large.

A Chinese patent document with publication number CN117091131A discloses an infrared burner, whose burning zone is composed of folded metal strips. The metal strips consist of flat strips and corrugated strips, which are arranged alternately to form a flame hole. In addition, the metal strips for conducting heat are thin, which reduces the heat transfer from a burning side to a contact side of a premixing and distribution chamber, preventing an excessively high contact temperature at a premixing and distribution side, and thus avoiding occurrence of a flashback. However, limited by poor deformability and a complex assembly structure of the metal strips, the infrared burner with the metal strips has limited application scenarios. Also, welding is required at joints of the metal strips during manufacturing, which results in complex processes and high application costs.

A Chinese patent document with publication number CN109716023A discloses a premix gas burner. A single piece of metal fiber (that is, a burner deck) is fixed to a metal plate structure, and a gas mixing space is formed inside the upwardly arched metal plate structure. Fuel gas/air flows through a passage hole on the metal plate structure and burns on the burner deck. By virtue of internal complex airflow passages of the metal fiber, the metal fiber enhances heat exchange between a fiber mesh and a mixed fuel gas inflow, and reduces a temperature of a contact side of the metal fiber with a premixing and distribution chamber, thus avoiding occurrence of a flashback. However, a weaving process of this type of metal fiber is complicated and a cost is relatively high, making it difficult to be widely adopted in a private sector.

In summary, there is an urgent need for a burner with high strength and a low cost currently.

**SUMMARY**

In view of the above problems, the present disclosure provides a burner, which adopts a burning mesh assembly to form a burning surface and has sufficient strength and a low cost.

The present disclosure further provides a cooking appliance comprising the above burner.

The burner according to the embodiments of the present disclosure comprises: a main body comprising a gas accommodating chamber configured to accommodate a combustible gas; a burning mesh assembly, where an opening of the gas accommodating chamber faces towards the burning mesh assembly to enable the combustible gas to burn on a surface of the burning mesh assembly, and where the burning mesh assembly faces towards an outside to radiate thermal energy to the outside; and a flashback resistant assembly configured to prevent a flame on the burning mesh assembly from entering the gas accommodating chamber.

The burner according to the embodiments of the present disclosure adopts the burning mesh assembly to form the burning surface, and has sufficient strength and low cost.

Optionally, the burning mesh assembly comprises a plurality of burning mesh holes, the burning mesh assembly being configured such that an equivalent diameter of the plurality of burning mesh holes is less than or equal to 0.8 mm. In a thickness direction of the burning mesh assembly, the flashback resistant assembly is arranged side by side with the burning mesh assembly, the flashback resistant assembly satisfying at least one of the following conditions: the flashback resistant assembly is configured to have thermal insulation and is located between the burning mesh assembly and the main body;

and the flashback resistant assembly is configured to perform heat exchange with the burning mesh assembly to dissipate heat from the burning mesh assembly.

Optionally, the flashback resistant assembly is located at a side of the burning mesh assembly facing towards the main body.

Optionally, the burner further comprises a support mesh assembly mounted between the burning mesh assembly and the flashback resistant assembly and configured to support the burning mesh assembly.

Optionally, the flashback resistant assembly is spaced apart from the support mesh assembly. The support mesh assembly is spaced apart from the burning mesh assembly.

Optionally, the support mesh assembly comprises at least one support mesh, the at least one support mesh being made of metal material.

Optionally, a mesh count of the support mesh ranges from 5 to 40.

Optionally, a thickness of the support mesh ranges from 0.2 mm to 2 mm.

Optionally, the burning mesh assembly comprises at least one burning mesh, the at least one burning mesh being made of metal material.

Optionally, a mesh count of the burning mesh ranges from 40 to 200.

Optionally, a thickness of the burning mesh ranges from 0.1 mm to 0.5 mm.

Optionally, a surface porosity of the burning mesh is greater than or equal to 40%.

Optionally, the flashback resistant assembly comprises at least one flashback barrier mesh, the at least one flashback barrier mesh being made of metal material.

Optionally, a mesh count of the flashback barrier mesh ranges from 40 to 200.

Optionally, a thickness of the flashback barrier mesh ranges from 0.15 mm to 2 mm.

Optionally, the flashback barrier mesh comprises a plurality of flashback prevention mesh holes, the flashback barrier mesh being configured such that an equivalent diameter of each of the plurality of flashback prevention mesh holes is greater than 0.8 mm, and less than or equal to 3 mm.

Optionally, the flashback resistant assembly comprises a plurality of flashback prevention mesh holes, a ratio of an equivalent diameter of the plurality of flashback prevention mesh holes to an equivalent diameter of the plurality of burning mesh hole ranging from 1 to 60.

Optionally, the flashback resistant assembly is in point contact with the burning mesh assembly.

Optionally, the flashback resistant assembly is a corrugated mesh.

Optionally, a plurality of flashback resistant assemblies are provided. The plurality of flashback resistant assemblies are arranged at each of two sides of the burning mesh assembly; or the plurality of flashback resistant assemblies are located at a same side of the burning mesh assembly.

Optionally, the flashback resistant assembly is a heat-insulating material member filled between the burning mesh assembly and the main body.

Optionally, the flashback resistant assembly is thermal insulation cotton or quartz cotton.

Optionally, the main body comprises: a housing; and a deflector connected to the housing, where the gas accommodating chamber is enclosed by the housing and the deflector, and where the deflector has a plurality of deflector holes configured to discharge the combustible gas in the gas accommodating chamber towards the burning mesh assembly.

Optionally, the plurality of deflector holes are uniformly arranged on the deflector.

Optionally, the burner further comprises a gas pipe connected to the housing and in communication with the gas accommodating chamber, the gas pipe being configured to deliver the combustible gas into the gas accommodating chamber.

Optionally, the gas pipe extends into the gas accommodating chamber. The gas pipe has a plurality of exhaust holes formed on a surface of the gas pipe.

A cooking appliance according to the embodiments of the present disclosure comprises the burner described in the above technical solutions.

Optionally, the cooking appliance comprises a pizza oven.

**BRIEF DESCRIPTION OF THE DRAWINGS**

The above and/or additional aspects and advantages of the present disclosure will become more apparent and more understandable from the following description of embodiments taken in conjunction with the accompanying drawings.

FIG. 1 illustrates a first schematic structural view of a burner according to an embodiment of the present disclosure.

FIG. 2 illustrates a second schematic structural view of a burner according to an embodiment of the present disclosure.

FIG. 3 illustrates a third schematic structural view of a burner according to an embodiment of the present disclosure.

FIG. 4 illustrates a partial view of a burning mesh according to an embodiment of the present disclosure.

FIG. 5 illustrates a structural diagram of a burner according to an embodiment of the present disclosure.

FIG. 6 is a fourth schematic view of a burner according to an embodiment of the present disclosure.

FIG. 7 is a first exploded view of the burner in FIG. 6.

FIG. 8 is a second exploded view of the burner in FIG. 6.

FIG. 9 is a schematic view of a burning mesh according to an embodiment of the present disclosure.

FIG. 10 is a schematic view of calculation results of quenching diameter under different temperatures and equivalence ratios.

FIG. 11 is a schematic view of fuel gas combustion at a burning mesh.

FIG. 12 is a schematic view of effect comparison for burning mesh holes with different equivalent diameters according to some embodiments.

FIG. 13 is a first schematic view of engagement between a corrugated flashback resistant assembly and a burning mesh.

FIG. 14 is a second schematic view of engagement between a corrugated flashback resistant assembly and a burning mesh.

FIG. 15 is a sectional view of the burner in FIG. 6.

FIG. 16 is an enlarged view of part A in FIG. 15.

FIG. 17 is a schematic view of a cooking appliance according to an embodiment of the present disclosure.

Reference numerals of the accompanying drawings: 100, burner; 110, main body; 111, gas accommodating chamber; 112, housing; 113, deflector; 114, deflector hole; 120, burning mesh assembly; 121, burning mesh; 130, flashback resistant assembly; 131, flashback barrier mesh; 140, support mesh assembly; 141, support mesh; 150, gas pipe; 151, exhaust hole; 152, first splitter plate; 200, cooking appliance.

## DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the description of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the features associated with "first" and "second" may explicitly or implicitly comprise at least one of the features. In the description of the present disclosure, "plurality" means at least two, unless otherwise specifically defined.

In the description of the present disclosure, it should be noted that, unless otherwise clearly specified and limited, terms such as "install", "connect", "connect to", and the like should be understood in a broad sense, and for example, can be understood as a fixed connection or a detachable connection or an integral connection, a mechanical connection or an electrical connection and a direct connection or an indirect connection through an intermediate. An internal communication of two components or the interaction relationship between two components. For those of ordinary skill in the art, the specific meaning of the above-mentioned terms in the present disclosure can be understood according to specific circumstances.

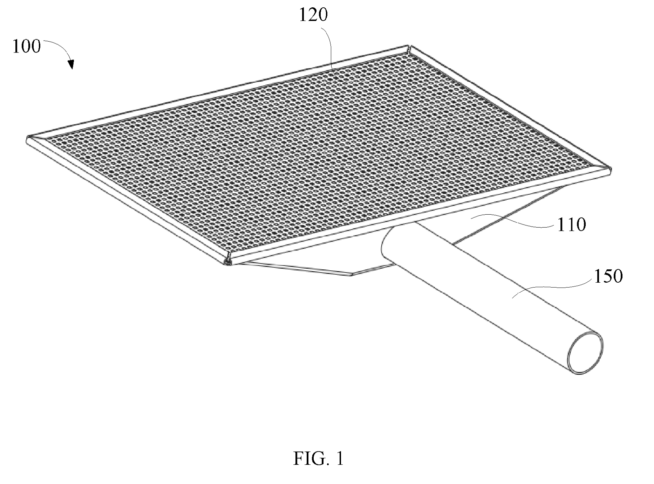

A burner 100 provided in some embodiments of the present disclosure is described below with reference to FIG. 1 to FIG. 5.

According to an embodiment of the present disclosure, as illustrated in FIG. 1, FIG. 2, FIG. 3, and FIG. 4, the present disclosure provides a burner 100. The burner 100 comprises a main body 110, a burning mesh assembly 120, and a flashback resistant assembly 130. The main body 110 comprises a gas accommodating chamber 111 configured to accommodate a combustible gas. An opening of the gas accommodating chamber 111 faces towards the burning mesh assembly 120 to enable the combustible gas to burn on a surface of the burning mesh assembly 120. The burning mesh assembly 120 faces towards an outside to radiate thermal energy to the outside. The flashback resistant assembly 130 is located at a side of the burning mesh assembly 120 facing towards the main body 110, and configured to prevent flames on the burning mesh assembly 120 from entering the gas accommodating chamber 111.

The burner 100 provided in the present disclosure can be applied to a cooking appliance. During operation, the burner 100 can heat an interior of the cooking appliance for heating and cooking food ingredients. The burner 100 comprises the main body 110, the burning mesh assembly 120, and the flashback resistant assembly 130. The main body 110 comprises the gas accommodating chamber 111 configured to accommodate the combustible gas. The combustor assembly is configured to burn the combustible gas, to increase a temperature of the burning mesh assembly 120 and enable the burning mesh assembly 120 to radiate the thermal energy. The flashback resistant assembly 130 is configured to prevent a flashback.

Specifically, a certain amount of combustible gas can be stored in the gas accommodating chamber 111, and the opening of the gas accommodating chamber 111 faces towards the combustor assembly, enabling the combustible gas to flow to the burning mesh assembly 120. The combustible gas burns on the burning mesh assembly 120, and a flame temperature reaches above 800°C. Thus, the flames heat the burning mesh assembly 120 and generate infrared thermal radiation, enabling the burning mesh assembly 120 to radiate the thermal energy.

Further, to prevent the flames on the burning mesh assembly 120 from entering the gas accommodating chamber 111 when a flashback occurs, the present disclosure further provides the flashback resistant assembly 130 disposed at the side of the burning mesh assembly 120 facing towards the main body 110. When a flashback phenomenon occurs, the flashback resistant assembly 130 can exert a certain blocking effect on the flames, preventing the flames from entering the gas accommodating chamber 111 and improving safety of the burner 100.

Further, the burner 100 is also provided with an ignition device disposed at the main body 110. The ignition device can ignite the combustible gas flowing to the burning mesh assembly 120, in such a manner that the burner 100 can operate normally and generate the thermal energy.

By providing the burning mesh assembly 120 and the flashback resistant assembly 130 in the burner 100, the combustible gas can burn on the burning mesh assembly 120, thus increasing the temperature of the burning mesh assembly 120 to enable the burning mesh assembly 120 to radiate the thermal energy. Also, through the flashback resistant assembly 130, the flames are prevented from entering the gas accommodating chamber 111, improving the safety of the burner 100. Compared with existing products, the burner 100 provided in the present disclosure has a more simplified structure, low manufacturing difficulty, reduced production costs, high safety, and high reliability.

In some embodiments, optionally, as illustrated in FIG. 1, FIG. 2, and FIG. 3, the burner 100 further comprises a support mesh assembly 140 mounted between the burning mesh assembly 120 and the flashback resistant assembly 130 and configured to support the burning mesh assembly 120.

In this embodiment, a structure of the burner 100 is limited. The burner 100 further comprises the support mesh assembly 140 configured to support the burning mesh assembly 120. It should be understood that if the burning mesh assembly 120 deforms, the flames on the surface of the burning mesh assembly 120 may be unstable, which will in turn affect a heating effect. To prevent the burning mesh assembly 120 from deforming, the support mesh assembly 140 is disposed in the burner 100 in the present disclosure. The support mesh assembly 140 can support the burning mesh assembly 120, to avoid the deformation of the burning mesh assembly 120. The support mesh assembly 140 may be made of materials with high strength and high temperature resistance, to improve stability of the burning mesh assembly 120.

By providing the support mesh assembly 140 configured to support the burning mesh assembly 120 in the burner 100, the burning mesh assembly 120 can be prevented from deforming, improving the stability of the burning mesh assembly 120, and further ensuring that the flames can burn stably on the burning mesh assembly 120.

In some embodiments, optionally, the flashback resistant assembly 130 is spaced apart from the support mesh assembly 140. The support mesh assembly 140 is spaced apart from the burning mesh assembly 120.

In this embodiment, the support mesh assembly 140, the burning mesh assembly 120, and the flashback resistant assembly 130 are further limited. Specifically, the spacing is formed between the support mesh assembly 140 and the burning mesh assembly 120, and the spacing is formed between the support mesh assembly 140 and the flashback resistant assembly 130. In this way, this is equivalent to forming an air insulation layer between the support mesh assembly 140, the burning mesh assembly 120, and the flashback resistant assembly 130. Compared to a structure where the support mesh assembly 140, the burning mesh assembly 120, and the flashback resistant assembly 130 are arranged in close contact with each other, the present disclosure may reduce heat transfer between the support mesh assembly 140, the burning mesh assembly 120, and the flashback resistant assembly 130, lower a temperature of the flashback resistant assembly 130, reduce a likelihood of the flashback, and enhance the safety of the burner 100 by providing the spacing between the support mesh assembly 140 and the burning mesh assembly 120 and the spacing between the support mesh assembly 140 and the flashback resistant assembly 130.

In some embodiments, optionally, the burning mesh assembly 120 comprises at least one burning mesh 121. The support mesh assembly 140 comprises at least one support mesh 141. The flashback resistant assembly 130 comprises at least one flashback barrier mesh 131. The burning mesh 121, the support mesh 141, and the flashback barrier mesh are made of metal materials.

In this embodiment, the burning mesh assembly 120, the support mesh assembly 140, and the flashback resistant assembly 130 are further limited. Specifically, the burning mesh assembly 120 comprises the at least one burning mesh 121. The support mesh assembly 140 comprises the at least one support mesh 141. The flashback resistant assembly 130 comprises the at least one flashback barrier mesh 131. The burning mesh 121, the support mesh 141, and the flashback barrier mesh are made of the metal materials. By manufacturing the burning mesh 121, the support mesh 141, and the flashback barrier mesh 131 using the metal materials, on the one hand, strength of the burning mesh 121, strength of the support mesh 141, and strength of the flashback barrier mesh 131 can be enhanced. Compared to a ceramic burning plate, the burning mesh 121, the support mesh 141, and the flashback barrier mesh 131 in the burner 100 provided in the present disclosure have higher strength. On the other hand, since a mesh structure made of the metal material features simple processing and ease of assembly, production difficulty is thus reduced.

In some embodiments, optionally, a mesh count of the burning mesh 121 ranges from 40 to 200.

In this embodiment, a mesh count range of the burning mesh 121 is limited. Specifically, the mesh count of the burning mesh 121 ranges from 40 to 200. It should be understood that the burning mesh 121 is configured to burn the combustible gas to generate flames, which requires the flames to burn in a stable and uniform distribution on the burning mesh 121. Therefore, the mesh count of the burning mesh 121 cannot be excessively low. Otherwise, the flames may be uneven. As a result, the present disclosure sets the mesh count of the burning mesh 121 within a range from 40 to 200, to ensure that the flames on the burning mesh 121 remain stable.

In some embodiments, optionally, a mesh count of the support mesh 141 ranges from 5 to 40.

In this embodiment, a mesh count range of the support mesh 141 is limited. Specifically, the mesh count of the support mesh 141 ranges from 5 to 40. Since the support mesh 141 is disposed between the burning mesh 121 and the gas accommodating chamber 111, the combustible gas needs to pass through the support mesh 141 to reach the burning mesh 121. Therefore, the support mesh 141 shall be constructed as a mesh structure with a large mesh hole size and a low mesh count. To this end, the present disclosure sets the mesh count of the support mesh 141 within a range from 5 to 40, to ensure that the combustible gas can flow smoothly through the support mesh 141.

In some embodiments, optionally, a mesh count of the flashback barrier mesh 131 ranges from 40 to 200.

In this embodiment, a mesh count range of the flashback barrier mesh 131 is limited. Specifically, the mesh count of the flashback barrier mesh 131 ranges from 40 to 200. The flashback barrier mesh 131 is configured to prevent the flashback. Therefore, the flashback barrier mesh 131 shall be constructed as a mesh structure with a relatively high mesh count. To this end, the present disclosure sets the mesh count of the flashback barrier mesh 131 within a range from 40 to 200, to enhance a barrier effect of the flashback barrier mesh 131.

In some embodiments, optionally, a thickness of the burning mesh 121 ranges from 0.1 mm to 0.5 mm.

In this embodiment, the thickness of the burning mesh 121 is limited. Specifically, the thickness of the burning mesh 121 ranges from 0.1 mm to 0.5 mm. In this way, a problem of product volume increase caused by an excessively large thickness of the burning mesh 121 is avoided, while ensuring that the strength of the burning mesh 121 meets service requirements.

In some embodiments, optionally, a thickness of the support mesh 141 ranges from 0.2 mm to 2 mm.

In this embodiment, the thickness of the support mesh 141 is limited. Specifically, the thickness of the support mesh 141 ranges from 0.2 mm to 2 mm. It should be understood that a function of the support mesh 141 is to support the burning mesh 121. Therefore, if the strength of the support mesh 141 is excessively low, the support mesh 141 may exhibit a poor support effect, which will in turn lead to deformation of the burning mesh 121. To this end, the present disclosure limits the thickness of the support mesh 141 within a range from 0.2 mm to 2 mm, to ensure that the strength of the support mesh 141 meets the service requirements. In addition, by ensuring that the support mesh 141 has a certain thickness, the support mesh 141 can also achieve a certain heat insulation effect.

In some embodiments, optionally, a thickness of the flashback barrier mesh 131 ranges from 0.1 mm to 0.5 mm.

In this embodiment, the thickness of the flashback barrier mesh 131 is limited. Specifically, the thickness of the flashback barrier mesh 131 ranges from 0.1 mm to 0.5 mm. In this way, the problem of the product volume increase caused by an excessively large thickness of the flashback barrier mesh 131 is avoided, while ensuring that the strength of the flashback barrier mesh 131 meets the service requirements.

In some embodiments, optionally, as illustrated in FIG. 1, FIG. 2, and FIG. 3, the main body 110 comprises a housing 112 and a deflector 113 connected to the housing 112. The gas accommodating chamber 111 is enclosed by the housing 112 and the deflector 113, and the deflector 113 has a plurality of deflector holes 114 configured to discharge the combustible gas in the gas accommodating chamber 111 to the burning mesh assembly 120.

In this embodiment, a structure of the main body 110 is limited. The main body 110 comprises the housing 112 and the deflector 113 connected to the housing 112. The gas accommodating chamber 111 is enclosed by the deflector 113 and the housing 112, and is configured to accommodate a certain amount of combustible gas. Further, the deflector 113 has the plurality of deflector holes 114. The combustible gas in the gas accommodating chamber 111 may flow to the burning mesh assembly 120 through the plurality of deflector holes 114, in such a manner that the combustible gas can burn on the burning mesh assembly 120, increasing the temperature of the burning mesh assembly 120, and thus enabling the burning mesh assembly 120 to radiate the thermal energy. The deflector hole 114 is configured to guide a flow of the combustible gas. Since the combustible gas flows to the burning mesh assembly 120 through the plurality of deflector holes 114, a rational design of positions of the plurality of deflector holes 114 may allow the combustible gas to flow more uniformly to the burning mesh assembly 120, avoiding uneven flame distribution at various positions on the burning mesh assembly 120, and maintaining a uniform temperature at various positions of the burning mesh assembly 120.

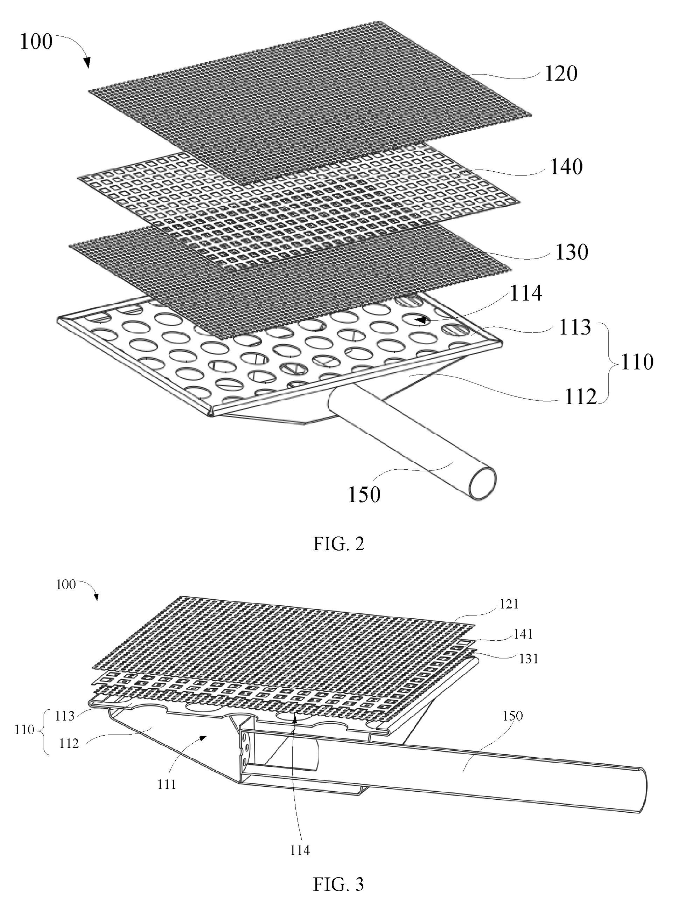

In some embodiments, optionally, as illustrated in FIG. 2, the plurality of deflector holes 114 are uniformly arranged on the deflector 113.

In this embodiment, the positions of the plurality of deflector holes 114 are limited. Specifically, the plurality of deflector holes 114 are uniformly arranged on the deflector 113. Since the combustible gas flows to the burning mesh assembly 120 through the plurality of deflector holes 114, the plurality of deflector holes 114 are uniformly arranged on the deflector 113, which may allow the combustible gas to flow more uniformly to the burning mesh assembly 120, avoiding the uneven flame distribution at the various positions on the burning mesh assembly 120, and maintaining the uniform temperature at the various positions of the burning mesh assembly 120.

In some embodiments, optionally, as illustrated in FIG. 1 and FIG. 2, the burner 100 further comprises a gas pipe 150 connected to the housing 112 and in communication with the gas accommodating chamber 111. The gas pipe 150 is configured to deliver the combustible gas into the gas accommodating chamber 111.

In this embodiment, the structure of the burner 100 is further limited. The burner 100 further comprises the gas pipe 150 configured to deliver the combustible gas into the gas accommodating chamber 111. Specifically, the gas pipe 150 is connected to the housing 112 and in communication with the gas accommodating chamber 111. The combustible gas flows into the gas accommodating chamber 111 through the gas pipe 150. The gas pipe 150 extends into the gas accommodating chamber 111 to discharge the combustible gas into the gas accommodating chamber 111 from a central area of the gas accommodating chamber 111, enabling concentration of the combustible gas to tend to be balanced in all parts of the gas accommodating chamber 111. Thus, the combustible gas flows more uniformly to the burning mesh assembly 120, improving uniformity of the flames on the burning mesh assembly 120.

In one possible embodiment, the burner 100 is mainly composed of a burning surface (i.e., the burning mesh assembly 120 and the support mesh assembly 140), an air distribution plate (i.e., the deflector 113), a chamber (i.e., the gas accommodating chamber 111), and an ejector pipe (i.e., the gas pipe 150). The burning surface is mainly composed of a flame burning mesh (i.e., the burning mesh assembly 120) and a heat-insulating support mesh (i.e., the support mesh assembly 140). The burner 100 further comprises the flashback barrier mesh 131.

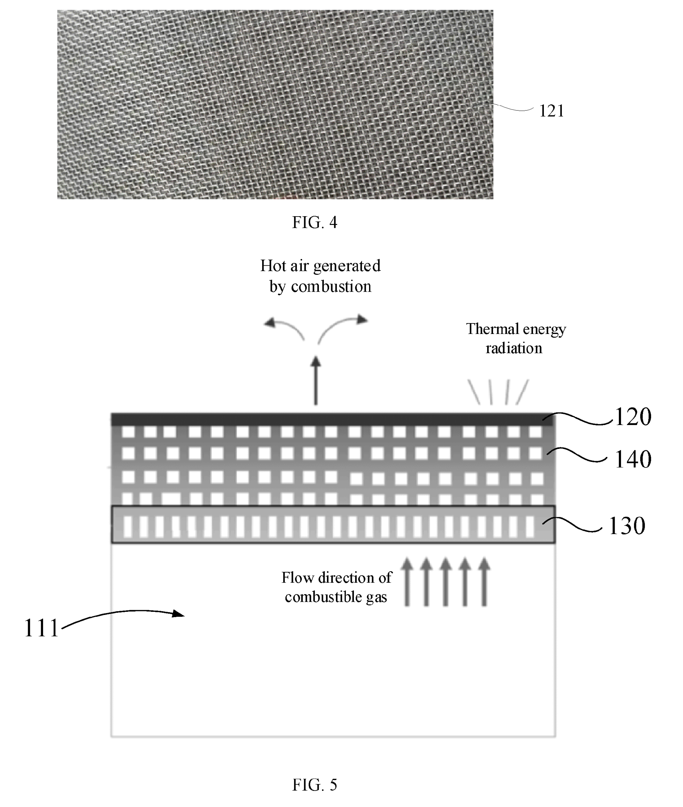

As illustrated in FIG. 5, a mixture of fuel gas and air (i.e., the combustible gas) enters the chamber through the ejector pipe. After being thoroughly mixed inside the chamber, the mixture enters the burning surface uniformly through the air distribution plate. A flow direction of the combustible gas is indicated by arrows shown in FIG. 5. The flames burn on the flame burning mesh of the burning surface, and generate outflowing hot air. A flow direction of the hot air is shown in FIG. 5, and the hot air radiates the thermal energy. The heat-insulating support mesh serves to support the flame burning mesh and block partial heat. The flashback barrier mesh 131 serves to prevent the flames from entering the chamber in the event of the flashback. A temperature of the flames after burning exceeds 800°C, which is used to heat the flame burning mesh and generate thermal radiation.

The flame burning mesh is located at an outer side of the heat-insulating support mesh, and the flashback barrier mesh 131 is located at an inner side of the heat-insulating support mesh, with the heat-insulating support mesh disposed between the flashback barrier mesh 131 and the flame burning mesh. After a fuel gas flow passes through the flashback barrier mesh 131 and the heat-insulating support mesh, the gas flow burns on the flame burning mesh.

The flame burning mesh has a mesh structure made of high-temperature-resistant and corrosion-resistant metal, with a mesh count ranging from 40 to 200 and a thickness ranging from 0.1 mm to 0.5 mm. The heat-insulating support mesh also has a mesh structure made of high-temperature-resistant and corrosion-resistant metal, with a mesh count ranging from 5 to 40 and a thickness ranging from 0.2 mm to 2 mm. The flashback barrier mesh 131 also has a mesh structure made of high-temperature-resistant and corrosion-resistant metal, with a mesh count ranging from 40 to 200 and a thickness ranging from 0.1 mm to 0.5 mm.

A mesh hole size of the heat-insulating support mesh is greater than a mesh hole size of the flame burning mesh. A certain spacing is formed between the heat-insulating support mesh and the flame burning mesh, and the spacing may range from 0 mm to 2 mm. A certain spacing is formed between the flashback barrier mesh 131 and the heat-insulating support mesh, and the spacing may range from 0 mm to 2 mm.

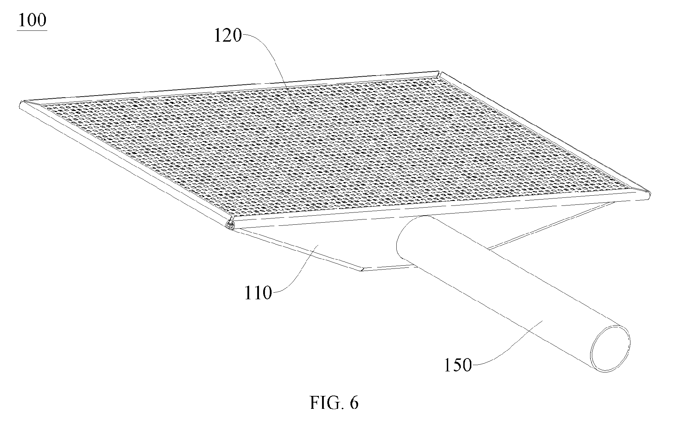

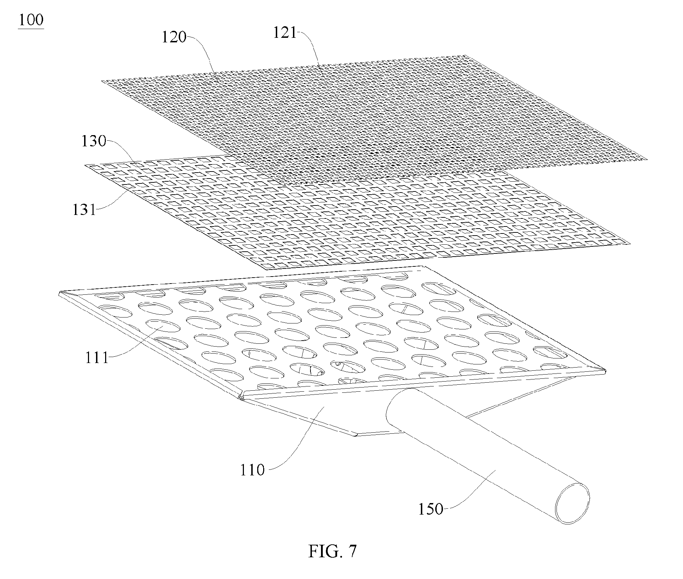

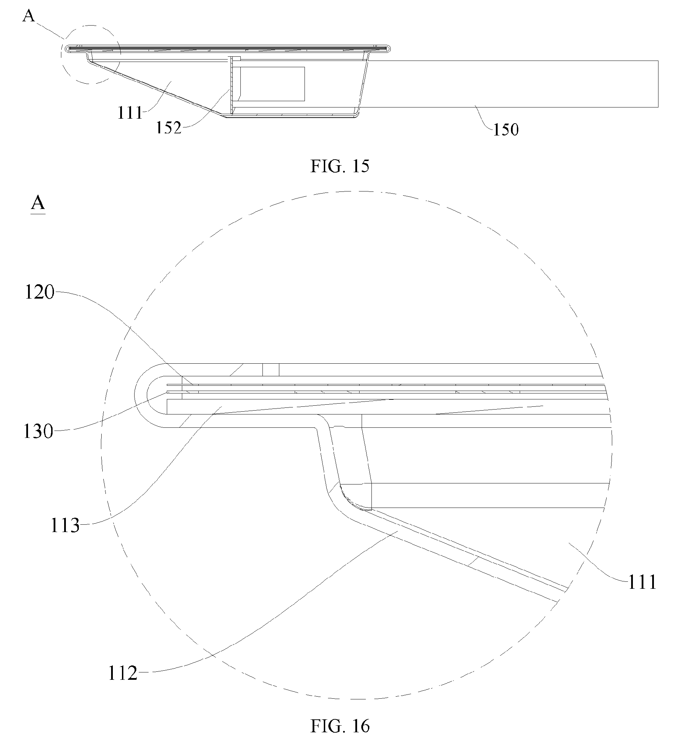

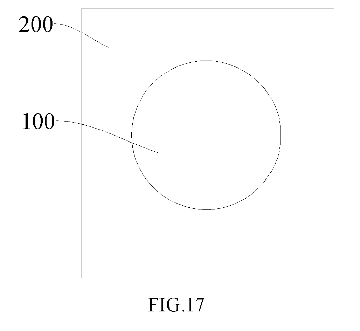

The burner 100 provided in the embodiments of the present disclosure is described below with reference to FIG. 6 to FIG. 17.

As illustrated in FIG. 6, FIG. 7, and FIG. 8, the burner 100 provided in the embodiments of the present disclosure comprises the main body 110 and the burning mesh assembly 120. The main body 110 has the gas accommodating chamber 111 formed inside the main body 110. The main body 110 has a gas outlet in communication with the gas accommodating chamber 111. The burning mesh assembly 120 is disposed at the main body 110, and an opening of the gas outlet faces towards the burning mesh assembly 120. The burning mesh assembly 120 has a plurality of burning mesh holes. The burning mesh assembly 120 is configured such that an equivalent diameter of each of the plurality of burning mesh holes is less than or equal to 0.8 mm.

The gas accommodating chamber 111 is configured to accommodate the combustible gas. Fuel gas in the gas accommodating chamber 111 may flow to the burning mesh assembly 120 through the gas outlet, and then the fuel gas flows through the plurality of burning mesh holes at the burning mesh assembly 120 to a side of the burning mesh assembly 120 facing away from the gas accommodating chamber 111, enabling the fuel gas to burn at the side of the burning mesh assembly 120 facing away from the gas accommodating chamber 111. Flames generated by combustion heat the burning mesh assembly 120. The burning mesh assembly 120 may be heated to a temperature above 800°C. The heated burning mesh assembly 120 may generate infrared thermal radiation to heat external objects.

It should be noted that since flames have a property of propagating along a flow path of fuel gas, propagation of the flames into the gas accommodating chamber 111 may result in combustion of the flames inside the gas accommodating chamber 111 and cause a flashback phenomenon. This type of flashback phenomenon, where the flames directly propagate into the gas accommodating chamber 111, is referred to as a dynamic flashback. To prevent the dynamic flashback from occurring, in the embodiments of the present disclosure, the equivalent diameter of the burning mesh hole is less than or equal to 0.8 mm.

It should be noted that the burning mesh holes may be circular holes, or may be diamond-shaped holes, hexagonal holes or other non-circular holes. When the burning mesh holes are non-circular holes, the burning mesh holes may be equivalent to circular holes with a same opening area. Therefore, an opening size of the burning mesh hole may thus be limited by the equivalent diameter of the burning mesh hole.

A quenching diameter dm is calculated by a formula $d_m = \dfrac{p_e \lambda_g}{S_L c_p \rho_g}$ , where $p_e$ represents a Peclet number, which is a key parameter for determination of combustion stability, and $p_e$ is selected to be 65, $\lambda_g$ represents a coefficient of thermal conductivity of a wall surface of the burning mesh holes, $S_L$ represents a combustion velocity, $c_p$ represents an isobaric specific heat capacity, and $\rho_g$ represents fuel gas density.

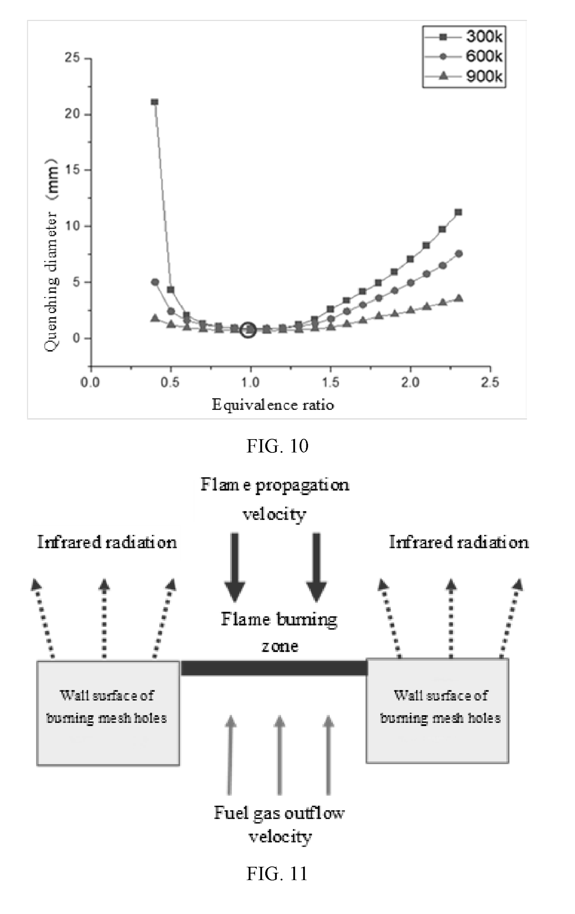

The coefficient $\lambda_g$ of the thermal conductivity of the wall surface of the burning mesh holes is determined by a material of the burning mesh assembly, the combustion velocity $S_L$ is determined by a type of the fuel gas and a premixing ratio of the fuel gas to air, the isobaric specific heat capacity $c_p$ is affected by a temperature, and the fuel gas density $\rho_g$ is affected by an equivalence ratio. As illustrated in FIG. 10, FIG. 10 is a schematic view of calculation results of the quenching diameter under different temperatures and equivalence ratios. For calculation, dm being less than or equal to 0.8 mm is selected, which is equivalent to the above requirement that the equivalent diameter of the burning mesh hole is less than or equal to 0.8 mm.

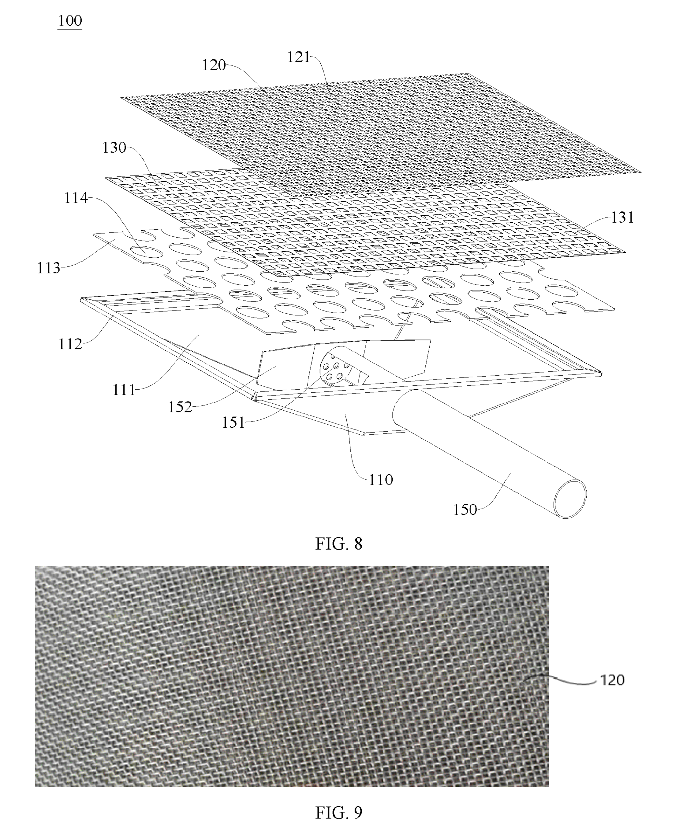

In the embodiments of the present disclosure, by limiting the equivalent diameter of the burning mesh hole, a risk of the flames passing through the burning mesh holes can be effectively avoided. This is because when the flames need to pass through small holes or passages along the propagation path, the flames may undergo a quenching phenomenon. That is, the burning mesh hole with a small equivalent diameter can prevent the flames from propagating to the gas accommodating chamber 111. In other words, the flames cannot pass through the burning mesh holes and can only burn at the side of the burning mesh assembly 120 facing away from the gas accommodating chamber 111. As illustrated in FIG. 9 and FIG. 11, in the embodiments of the present disclosure, the equivalent diameter of the burning mesh hole is less than or equal to 0.8 mm, so the flames cannot pass through the burning mesh holes, preventing the flames from propagating to the gas accommodating chamber 111. Also, when a flow velocity of the fuel gas is less than or equal to a flame propagation velocity, the flames can stably burn at orifices of the burning mesh holes facing away from the gas accommodating chamber 111, which effectively enhances application reliability of the burner 100.

As illustrated in FIG. 8, FIG. 15, and FIG. 16, in the embodiments of the present disclosure, the burner 100 further comprises the flashback resistant assembly 130. In a thickness direction of the burning mesh assembly 120, the flashback resistant assembly 130 is arranged side by side with the burning mesh assembly 120. The flashback resistant assembly 130 has thermal insulation properties and is located between the burning mesh assembly 120 and the main body 110.

Since the burning flames heat the burning mesh assembly 120, heat of the burning mesh assembly 120 may propagate towards the main body 110, causing a temperature of the main body 110 to increase gradually. If a temperature inside the gas accommodating chamber 111 increases to an auto-ignition temperature of the fuel gas, the fuel gas inside the gas accommodating chamber 111 may be ignited, resulting in the flashback phenomenon. This type of flashback phenomenon is referred to as a static flashback.

In the embodiments of the present disclosure, by providing the flashback resistant assembly 130 between the burning mesh assembly 120 and the main body 110, since the flashback resistant assembly 130 has the thermal insulation properties, the flashback resistant assembly 130 can block the heat transferred from the burning mesh assembly 120 to the main body 110, reducing the temperature inside the gas accommodating chamber 111, and effectively reducing a risk of the static flashback.

In the above embodiments, the flashback resistant assembly 130 has the thermal insulation properties and is located between the burning mesh assembly 120 and the main body 110. In other embodiments, the flashback resistant assembly 130 is further configured to perform heat exchange with the burning mesh assembly 120 to dissipate heat from the burning mesh assembly 120. Specifically, the flashback resistant assembly 130 is disposed at the side of the burning mesh assembly 120 facing away from the gas accommodating chamber 111. When the burner 100 is in operation, the flames heat the burning mesh assembly 120, and the heat exchange occurs between the flashback resistant assembly 130 and the burning mesh assembly 120. In this way, heat dissipation efficiency of the burning mesh assembly 120 is improved, reducing a temperature at a side of the burning mesh assembly 120 facing towards the gas accommodating chamber 111, and further reducing the risk of the static flashback.

In other embodiments, two flashback resistant assemblies 130 may be provided, one of the two flashback resistant assemblies 130 has the thermal insulation properties and is located between the burning mesh assembly 120 and the main body 110, and the other one of the two flashback resistant assemblies 130 is disposed at the side of the burning mesh assembly 120 facing away from the gas accommodating chamber 111 for dissipating the heat from the burning mesh assembly 120.

For the two flashback resistant assemblies 130 provided in the embodiments of the present disclosure, one of the two flashback resistant assemblies 130 is configured to block the heat transfer to the gas accommodating chamber 111, and the other one of the two flashback resistant assemblies 130 is configured to improve the heat dissipation efficiency of the burning mesh assembly 120, in such a manner that the temperature inside the gas accommodating chamber 111 is effectively reduced, and the risk of the static flashback is effectively reduced.

According to the burner 100 provided in the embodiments of the present disclosure, the equivalent diameter of the burning mesh hole is less than or equal to 0.8 mm. By limiting the equivalent diameter of the burning mesh hole, the flames can be prevented from propagating through the burning mesh holes to the gas accommodating chamber 111, thus avoiding the occurrence of the dynamic flashback. The flames cannot pass through the burning mesh holes and can only burn at the side of the burning mesh assembly 120 facing away from the gas accommodating chamber 111, which enhances the application reliability of the burner 100. In addition, the burner 100 is provided with the flashback resistant assembly 130 configured to block the heat transfer to the gas accommodating chamber 111 and/or improve the heat dissipation efficiency of the burning mesh assembly 120, in such a manner that the risk of the static flashback is effectively reduced, and the application reliability of the burner 100 is further improved.

In some specific embodiments, the burning mesh assembly 120 comprises the at least one burning mesh 121. The burning mesh 121 has the above-described burning mesh holes formed at the burning mesh 121. The burning mesh 121 is a metal material member. In the embodiments of the present disclosure, the burning mesh assembly 120 has a simple structure, which reduces a cost of the burner 100.

In some further embodiments, the equivalent diameter of the burning mesh hole is greater than or equal to 0.05 mm, and the equivalent diameter of the burning mesh hole is less than or equal to 0.8 mm.

If the equivalent diameter of the burning mesh hole is greater than 0.8 mm, the flames may pass through the burning mesh holes during propagation, causing the occurrence of the dynamic flashback. If the equivalent diameter of the burning mesh hole is less than 0.05 mm, a resistance of the fuel gas passing through the burning mesh assembly 120 may be increased, affecting burning efficiency, and thus affecting a heating effect of the burner 100. In the embodiments of the present disclosure, the equivalent diameter of the burning mesh hole is limited within a range from 0.05 mm to 0.8 mm, which enables the fuel gas to flow smoothly through the burning mesh assembly 120 and burn at the side of the burning mesh assembly 120 facing away from the gas accommodating chamber 111. In this way, while ensuring the heating effect of the burner 100, a likelihood of the flames passing through the burning mesh holes is eliminated, and the risk of the dynamic flashback is avoided.

In some specific embodiments, the equivalent diameter of the burning mesh hole may be any value selected from 0.05 mm, 0.25 mm, 0.35 mm, 0.55 mm, 0.65 mm, 0.75 mm, and 0.8 mm, or any range value between any two of the above values.

In some preferable embodiments, the equivalent diameter of the burning mesh hole is greater than or equal to 0.05 mm, and less than or equal to 0.3 mm.

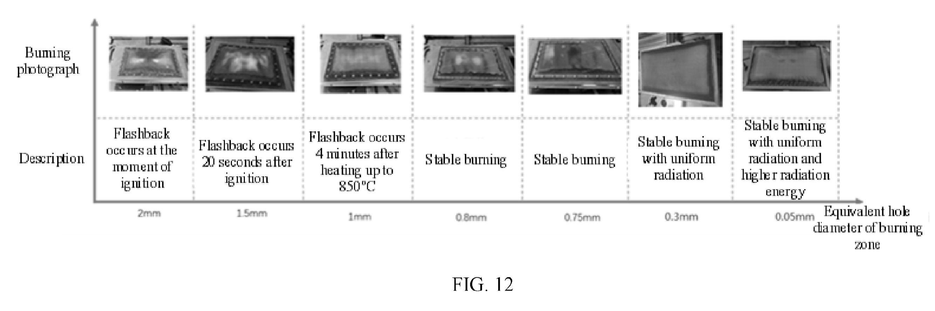

As can be seen from FIG. 12, in the case that the equivalent diameter of the burning mesh hole is less than or equal to 0.8 mm, the flames can stably burn on the burning mesh assembly without the flashback phenomenon occurring. Also, as can be seen from FIG. 12, in the case that the equivalent diameter of the burning mesh hole is less than or equal to 0.3 mm, the flames can not only stably burn on the burning mesh, but also the burning mesh is heated more uniformly as a whole, and the thermal radiation generated by the burning mesh is also more uniform, which effectively enhances the heating effect of the burner.

In some embodiments, a surface porosity of the burning mesh assembly 120 is greater than or equal to 40%.

It should be noted that the surface porosity of the burning mesh assembly 120 is defined as a ratio of an area of the burning mesh holes to a unit area. Since the plurality of burning mesh holes at the burning mesh assembly 120 may be unevenly distributed, by limiting the surface porosity of the burning mesh assembly 120, the present disclosure enables the fuel gas to be distributed more uniformly on the burning mesh assembly 120, reducing a temperature difference between different positions of the burning mesh assembly 120, and enhancing the heating effect of the burner 100.

In some further embodiments, a thickness of the burning mesh assembly 120 ranges from 0.1 mm to 0.5 mm.

If the thickness of the burning mesh assembly 120 is less than 0.1 mm, the strength of the burning mesh assembly 120 may be affected, making the burning mesh assembly 120 more prone to deformation. If the thickness of the burning mesh assembly 120 is greater than 0.5 mm, an overall thickness of the burner 100 may be increased, which is not conducive to miniaturization of the burner 100 and may also increase the cost of the burner 100. In the embodiments of the present disclosure, the thickness of the burning mesh assembly 120 ranges from 0.1 mm to 0.5 mm. In this way, not only the strength of the burning mesh assembly 120 can be ensured, but also the overall thickness of the burner 100 can be prevented from being excessively large, further reducing the cost of the burner 100.

In some specific embodiments, the thickness of the burning mesh assembly 120 may be any value selected from 0.1 mm, 0.25 mm, 0.38 mm, and 0.5 mm, or any range value between any two of the above values.

In some embodiments, the flashback resistant assembly 130 has the thermal insulation properties and is located between the burning mesh assembly 120 and the main body 110. The flashback resistant assembly 130 is in point contact with the burning mesh assembly 120.

In the embodiments of the present disclosure, the flashback resistant assembly 130 is in point contact with the burning mesh assembly 120, with a relatively large contact thermal resistance. Efficiency of the heat transfer from the burning mesh assembly 120 to the flashback resistant assembly 130 is reduced. Consequently, the heat on the burning mesh assembly 120 cannot be continuously transferred through the flashback resistant assembly 130 to the fuel gas inside the gas accommodating chamber 111, preventing the temperature inside the gas accommodating chamber 111 from increasing to the auto-ignition temperature of the fuel gas.

It should be noted that the point contact between the flashback resistant assembly 130 and the burning mesh assembly 120 means that a contact area between the flashback resistant assembly 130 and the burning mesh assembly 120 is in point contact. A plurality of contact points may be provided between the flashback resistant assembly 130 and the burning mesh assembly 120, which ensures reliability of connection between the flashback resistant assembly 130 and the burning mesh assembly 120.

In some specific embodiments, the flashback resistant assembly 130 comprises the flashback barrier mesh 131. The flashback barrier mesh 131 is a metal member. The flashback barrier mesh 131 is located between the burning mesh assembly 120 and the main body 110, and is in point contact with the burning mesh assembly 120.

In the embodiments of the present disclosure, the flashback resistant assembly 130 has a simple structure, which facilitates mounting and reduces the cost of the burner 100. In addition, the flashback barrier mesh 131 is constructed as a metal mesh structure, in such a manner that the flashback resistant assembly 130 may also support the burning mesh assembly 120. It should be understood that if the burning mesh assembly 120 deforms due to an excessively high temperature, the flames on the surface of the burning mesh assembly 120 may be unstable, thus affecting the heating effect. To prevent the burning mesh assembly 120 from deforming, in the embodiments of the present disclosure, the flashback resistant assembly 130 may be used to support the burning mesh assembly 120, thus avoiding the deformation of the burning mesh assembly 120. The flashback resistant assembly 130 may be made of materials with high strength and high temperature resistance, to enhance the stability of the burning mesh assembly 120.

In some further embodiments, the flashback resistant assembly 130 is located between the burning mesh assembly 120 and the main body 110. The flashback resistant assembly 130 comprises the flashback barrier mesh 131. The flashback barrier mesh 131 is a metal member and comprises a plurality of flashback prevention mesh holes. The flashback barrier mesh 131 is configured such that an equivalent diameter of each of the plurality of flashback prevention mesh holes is greater than 0.8 mm, and less than or equal to 3 mm.

During the operation of the burner 100, the fuel gas inside the gas accommodating chamber 111 flows to the burning mesh assembly 120, passes through the flashback prevention mesh holes and burning mesh holes in sequence to reach the side of the burning mesh assembly 120 facing away from the gas accommodating chamber 111, and burns at the side of the burning mesh assembly 120 facing away from the gas accommodating chamber 111. The flames generated by the combustion heat the burning mesh assembly 120, and the heated burning mesh assembly 120 may generate the infrared thermal radiation to heat the external objects.

If the equivalent diameter of the flashback prevention mesh hole is less than 0.8 mm, a resistance of the fuel gas passing through the flashback resistant assembly 130 may increase, affecting the burning efficiency. If the equivalent diameter of the flashback prevention mesh hole is greater than 3 mm, the number of the contact points between the flashback resistant assembly 130 and the burning mesh assembly 120 may decrease, affecting a support effect of the flashback resistant assembly 130 on the burning mesh assembly 120. In the embodiments of the present disclosure, the equivalent diameter of each of the plurality of flashback prevention mesh holes is greater than 0.8 mm and less than or equal to 3 mm, which reduces the resistance of the fuel gas passing through the flashback resistant assembly 130, enabling the combustible gas to flow smoothly to the burning mesh assembly 120 and ensuring a normal operation of the burner 100. Meanwhile, the support effect of the flashback resistant assembly 130 on the burning mesh assembly 120 is ensured, reducing a risk of the deformation of the burning mesh assembly 120.

It should be noted that the flashback prevention mesh holes may be circular holes, or may be diamond-shaped holes, hexagonal holes or other non-circular holes. When the flashback prevention mesh holes are non-circular holes, the flashback prevention mesh holes may be equivalent to circular holes with a same opening area. Therefore, an opening size of the flashback prevention mesh hole may thus be limited by the equivalent diameter of the flashback prevention mesh hole.

In some specific embodiments, the equivalent diameter of the flashback prevention mesh hole may be any value selected from 0.9 mm, 1.2 mm, 1.6 mm, 1.9 mm, 2.2 mm, 2.7 mm, and 3 mm, or any range value between any two of the above values.

In some embodiments, the flashback resistant assembly 130 comprises the plurality of flashback prevention mesh holes. A ratio of the equivalent diameter of each of the plurality of flashback prevention mesh holes to the equivalent diameter of the burning mesh hole ranges from 1 to 60.

If the ratio of the equivalent diameter of the flashback prevention mesh hole to the equivalent diameter of the burning mesh hole is less than 1, it is indicated that the opening area of the flashback prevention mesh hole is smaller than the opening area of the burning mesh hole, and the resistance of the fuel gas passing through the flashback resistant assembly 130 may increase, affecting the burning efficiency. If the ratio of the equivalent diameter of the flashback prevention mesh hole to the equivalent diameter of the burning mesh hole is greater than 60, the opening area of the flashback prevention mesh hole may be excessively large, and the number of the contact points between the flashback resistant assembly 130 and the burning mesh assembly 120 may decrease, affecting the support effect of the flashback resistant assembly 130 on the burning mesh assembly 120. In the embodiments of the present disclosure, the ratio of the equivalent diameter of the flashback prevention mesh hole to the equivalent diameter of the burning mesh hole ranges from 1 to 60, which reduces the resistance of fuel gas passing through the flashback resistant assembly 130, enabling the combustible gas to flow smoothly to the burning mesh assembly 120, and ensuring the normal operation of the burner 100. Meanwhile, the support effect of the flashback resistant assembly 130 on the burning mesh assembly 120 is ensured, reducing the risk of the deformation of the burning mesh assembly 120.

In some specific embodiments, the ratio of the equivalent diameter of the flashback prevention mesh hole to the equivalent diameter of the burning mesh hole may be any value selected from 1.1, 2, 8, 19, 22, 47, and 60 or any range value between any two of the above values.

In some embodiments, a surface porosity of the flashback barrier mesh 131 is greater than or equal to 40%.

It should be noted that the surface porosity of the flashback barrier mesh 131 is defined as a ratio of an area of the flashback prevention mesh holes to a unit area. Since the plurality of flashback prevention mesh holes at the flashback barrier mesh 131 may be unevenly distributed, by limiting the surface porosity of the flashback barrier mesh 131 in the present disclosure, the flashback barrier mesh 131 can be prevented from affecting uniformity of fuel gas distribution, enabling the fuel gas to be distributed more uniformly on the burning mesh assembly 120, reducing the temperature difference between different positions of the burning mesh assembly 120, and enhancing the heating effect of the burner 100.

In some embodiments, the thickness of the flashback barrier mesh 131 ranges from 0.15 mm to 2 mm.

If the thickness of the flashback barrier mesh 131 is less than 0.15 mm, the strength of the flashback barrier mesh 131 may be affected, making the flashback barrier mesh 131 prone to deformation. If the thickness of the flashback barrier mesh 131 is greater than 2 mm, the overall thickness of the burner 100 may be increased, which is not conducive to the miniaturization of the burner 100 and may also increase the cost of the burner 100. In the embodiments of the present disclosure, the thickness of the flashback barrier mesh 131 ranges from 0.15 mm to 2 mm. In this way, not only the strength of the flashback barrier mesh 131 can be ensured, but also the overall thickness of the burner 100 can be prevented from being excessively large, further reducing the cost of the burner 100.

In some specific embodiments, the thickness of the flashback barrier mesh 131 may be any value selected from 0.15 mm, 0.35 mm, 0.8 mm, 1.1 mm, 1.5mm, and 2mm or any range value between any two of the above values.

In some embodiments, the burner 100 comprises the main body 110, the burning mesh assembly 120, and the flashback resistant assembly 130. The main body 110 comprises the gas accommodating chamber 111 configured to receive the combustible gas. The opening of the gas accommodating chamber 111 faces towards the burning mesh assembly 120 to enable the combustible gas to burn on the surface of the burning mesh assembly 120. The burning mesh assembly 120 faces towards the outside to radiate the thermal energy to the outside. The flashback resistant assembly 130 mounted between the burning mesh assembly 120 and the main body 110. The flashback resistant assembly 130 is configured to block the heat transfer to the gas accommodating chamber 111, and is also configured to support the burning mesh assembly 120. The flashback resistant assembly 130 comprises the flashback barrier mesh 131, and a mesh hole size of the flashback barrier mesh 131 is greater than a mesh hole size of the burning mesh assembly 120.

The burner 100 provided in the present disclosure can be applied to the cooking appliance. During the operation, the burner 100 can heat the interior of the cooking appliance for heating and cooking the food ingredients. The burner 100 comprises the main body 110, the burning mesh assembly 120, and the flashback resistant assembly 130. The main body 110 comprises the gas accommodating chamber 111 configured to accommodate the combustible gas. The burning mesh assembly 120 is configured to burn the combustible gas. The flashback resistant assembly 130 is configured to support the burning mesh assembly 120.

Specifically, a certain amount of combustible gas can be stored in the gas accommodating chamber 111, and the opening of the gas accommodating chamber 111 faces towards the burning mesh assembly 120 to enable the combustible gas to flow to the burning mesh assembly 120. The combustible gas burns on the burning mesh assembly 120, and the flame temperature reaches above 800°C. Thus, the flames heat the burning mesh assembly 120 and generate the infrared thermal radiation, enabling the burning mesh assembly 120 to radiate the thermal energy.

Further, in the present disclosure, the burner 100 is further provided with the flashback resistant assembly 130 configured to support the burning mesh assembly 120. It should be understood that if the burning mesh assembly 120 deforms, the flames on the surface of the burning mesh assembly 120 may be unstable, which will in turn affect the heating effect. To prevent the burning mesh assembly 120 from deforming, the flashback resistant assembly 130 is disposed in the burner 100 in the present disclosure. The flashback resistant assembly 130 can support the burning mesh assembly 120, to avoid the deformation of the burning mesh assembly 120. The flashback resistant assembly 130 may be made of materials with high strength and high temperature resistance, to improve the stability of the burning mesh assembly 120.

Further, since the flashback resistant assembly 130 is located between the main body 110 and the burning mesh assembly 120, the combustible gas needs to pass through the flashback resistant assembly 130 to flow to the burning mesh assembly 120. To enable the combustible gas to flow smoothly through the flashback resistant assembly 130, in the present disclosure, the mesh hole size of the flashback resistant assembly 130 is set to be greater than the mesh hole size of the burning mesh assembly 120. In this way, a resistance of the flashback resistant assembly 130 to the combustible gas can be reduced, enabling the combustible gas to flow smoothly to the burning mesh assembly 120, and ensuring the normal operation of the burner 100.

By providing the flashback resistant assembly 130 configured to support the burning mesh assembly 120 in the burner 100, the deformation of the burning mesh assembly 120 can be avoided, and the stability of the burning mesh assembly 120 can be enhanced, further ensuring stable combustion of the flames on the burning mesh assembly 120. By setting the mesh hole size of the flashback resistant assembly 130 to be greater than the mesh hole size of the burning mesh assembly 120, the resistance of the flashback resistant assembly 130 to the combustible gas can be reduced, enabling the combustible gas to flow smoothly to the burning mesh assembly 120, and ensuring the normal operation of the burner 100.

In some embodiments, optionally, as illustrated in FIG. 6, FIG. 7, and FIG. 8, a mesh count of the flashback resistant assembly 130 is less than a mesh count of the burning mesh assembly 120.

In this embodiment, the burning mesh assembly 120 and the flashback resistant assembly 130 are further limited. Specifically, the mesh count of the flashback resistant assembly 130 is less than the mesh count of the burning mesh assembly 120. By setting the mesh count of the flashback resistant assembly 130 to be less than the mesh count of the burning mesh assembly 120, the mesh hole size of the flashback resistant assembly 130 can be increased. Further, the resistance of the flashback resistant assembly 130 to the combustible gas can be reduced, enabling the combustible gas to flow smoothly to the burning mesh assembly 120, and ensuring the normal operation of the burner 100.

In some embodiments, optionally, the mesh count of the burning mesh assembly 120 ranges from 40 to 200. The mesh count of the flashback resistant assembly 130 ranges from 5 to 40.

In this embodiment, the mesh count of the burning mesh assembly 120 and mesh count of the flashback resistant assembly 130 are limited. Specifically, the mesh count of the burning mesh assembly 120 ranges from 40 to 200. It should be understood that the burning mesh assembly 120 is configured to burn the combustible gas to generate the flames, which requires the flames to burn in a stable and uniform distribution on the burning mesh assembly 120. Therefore, the mesh count of the burning mesh assembly 120 cannot be excessively low. Otherwise, the flames may be uneven. As a result, the present disclosure sets the mesh count of the burning mesh assembly 120 within a range from 40 to 200, to ensure that the flames on the burning mesh assembly 120 remain stable.

Further, the mesh count of the flashback resistant assembly 130 ranges from 5 to 40. Since the flashback resistant assembly 130 is disposed between the burning mesh assembly 120 and the gas accommodating chamber 111, the combustible gas needs to pass through the flashback resistant assembly 130 to reach the burning mesh assembly 120. Therefore, the flashback resistant assembly 130 shall be constructed as a mesh structure with a large mesh hole size and a low mesh count. To this end, the present disclosure sets the mesh count of the flashback resistant assembly 130 within a range from 5 to 40, to ensure that the combustible gas can flow smoothly through the flashback resistant assembly 130.

In some embodiments, optionally, the thickness of the burning mesh assembly 120 ranges from 0.1 mm to 0.5 mm.

In this embodiment, the thickness of the burning mesh assembly 120 is limited. Specifically, the thickness of the burning mesh assembly 120 ranges from 0.1 mm to 0.5 mm. In this way, a problem of product volume increase caused by an excessively large thickness of the burning mesh assembly 120 is avoided, while ensuring that the strength of the burning mesh assembly 120 meets the service requirements.

In some embodiments, optionally, a thickness of the flashback resistant assembly 130 ranges from 0.15 mm to 2 mm.

In this embodiment, the thickness of the flashback resistant assembly 130 is limited. Specifically, the thickness of the flashback resistant assembly 130 ranges from 0.15 mm to 2 mm. It should be understood that a function of the flashback resistant assembly 130 is to support the burning mesh assembly 120. Therefore, if the strength of the flashback resistant assembly 130 is excessively low, the flashback resistant assembly 130 may exhibit a poor support effect, which will in turn lead to the deformation of the burning mesh assembly 120. To this end, the present disclosure limits the thickness of the flashback resistant assembly 130 within a range from 0.15 mm to 2 mm, to ensure that the strength of the flashback resistant assembly 130 meets the service requirements. In addition, by ensuring that the flashback resistant assembly 130 has a certain thickness, the flashback resistant assembly 130 can also achieve a certain heat insulation effect.

In some embodiments, optionally, the burning mesh assembly 120 and the flashback resistant assembly 130 are made of metal.

In this embodiment, the burning mesh assembly 120 and the flashback resistant assembly 130 are further limited. Specifically, the burning mesh assembly 120 and the flashback resistant assembly 130 are made of the metal materials. By manufacturing the burning mesh assembly 120 and the flashback resistant assembly 130 using the metal materials, on the one hand, the strength of the burning mesh assembly 120 and the strength of the flashback resistant assembly 130 can be enhanced. Compared to the ceramic burning plate, the burning mesh assembly 120 and the flashback resistant assembly 130 in the burner 100 provided in the present disclosure have higher strength. On the other hand, since the mesh structure made of the metal material features low processing difficulty and ease of assembly, the production difficulty is thus reduced.

In some embodiments, optionally, the flashback resistant assembly 130 is spaced apart from the burning mesh assembly 120.

In this embodiment, the flashback resistant assembly 130 and the burning mesh assembly 120 are further limited. Specifically, the spacing is formed between the flashback resistant assembly 130 and the burning mesh assembly 120. In this way, this is equivalent to forming an air insulation layer between the flashback resistant assembly 130 and the burning mesh assembly 120. Compared to a structure where the flashback resistant assembly 130 and the burning mesh assembly 120 are arranged in close contact with each other, the present disclosure may reduce heat transfer between the flashback resistant assembly 130 and the burning mesh assembly 120, lower the temperature of the flashback resistant assembly 130, reduce the likelihood of the flashback, and enhance the safety of the burner 100 by providing the spacing between the flashback resistant assembly 130 and the burning mesh assembly 120.

In some embodiments, the flashback resistant assembly 130 is a heat-insulating material member filled between the burning mesh assembly 120 and the main body 110.

In the above technical solutions, excellent thermal insulation performance of the heat-insulating material member can effectively block the heat transfer to the gas accommodating chamber 111, further reducing the risk of the static flashback, and further improving the application reliability of the burner 100.

In some specific embodiments, the flashback resistant assembly 130 may be thermal insulation cotton or quartz cotton.

The thermal insulation cotton and the quartz cotton have voids allowing gas to pass through, which may not affect a flow of the fuel gas and ensure that the fuel gas can smoothly flow to the burning mesh assembly 120 for combustion. In addition, the thermal insulation cotton and the quartz cotton have excellent fire resistance and thermal insulation performance, which can effectively block the heat transfer to the gas accommodating chamber 111, thus improving the application reliability of the burner 100.

In some embodiments, the flashback resistant assembly 130 is disposed at the side of the gas accommodating chamber 111 facing away from the burning mesh assembly 120. The flashback resistant assembly 130 is configured to perform the heat exchange with the burning mesh assembly 120 to dissipate heat from the burning mesh assembly 120. The flashback resistant assembly 130 is a metal member and has a mesh structure.

In the embodiments of the present disclosure, the flashback resistant assembly 130 is the metal member, which is conducive to improving the heat dissipation efficiency of the flashback resistant assembly 130, improving the heat dissipation efficiency of the burning mesh assembly 120, and reducing the risk of the static flashback. In addition, the flashback resistant assembly 130 can also support the burning mesh assembly 120 to prevent the burning mesh assembly 120 from deforming.

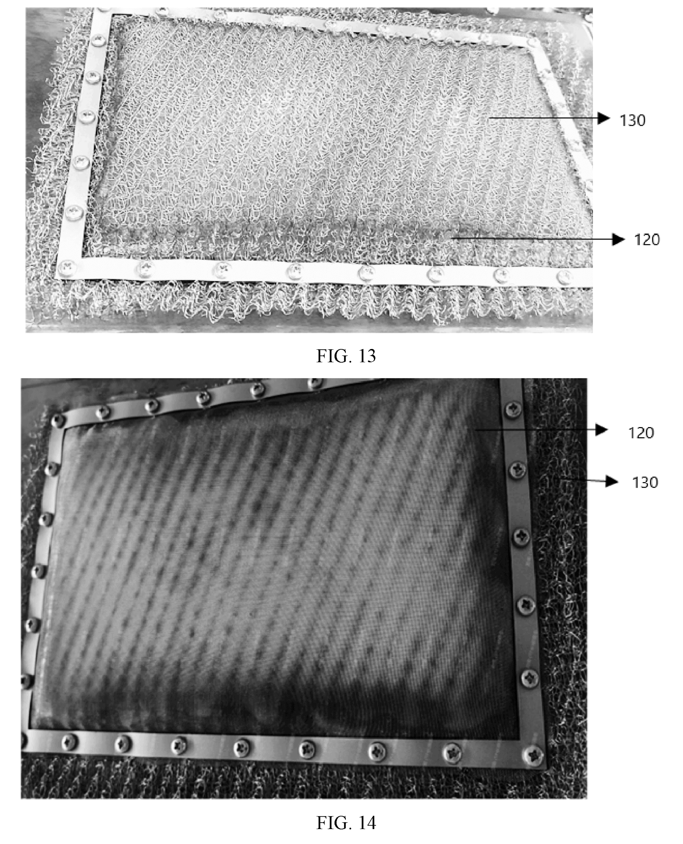

As illustrated in FIG. 13, in some embodiments, the flashback resistant assembly 130 is disposed at the side of the burning mesh assembly 120 facing away from the gas accommodating chamber 111. The flashback resistant assembly 130 is capable of performing the heat exchange with the burning mesh assembly 120 to dissipate the heat from the burning mesh assembly 120, and the flashback resistant assembly 130 is a corrugated mesh. The corrugated mesh refers to a type of solid mesh formed in a wave shape commonly used in the field, and the mesh is made of a ductile material, such as the metal material.

With the above technical solutions, the corrugated flashback resistant assembly 130 increases a contact area between the flashback resistant assembly 130 and air, and enhances the heat dissipation efficiency of the flashback resistant assembly 130, improving a heat dissipation effect of the burning mesh assembly 120, and further reducing the risk of the static flashback.

As illustrated in FIG. 14, in some embodiments, the flashback resistant assembly 130 has the thermal insulation properties and is located between the burning mesh assembly 120 and the main body 110. The burning mesh assembly 120 is a corrugated mesh.

In the embodiments of the present disclosure, by providing the flashback resistant assembly 130 between the burning mesh assembly 120 and the main body 110, since the flashback resistant assembly 130 has the thermal insulation properties, the flashback resistant assembly 130 can block the heat transferred from the burning mesh assembly 120 to the main body 110, reducing the temperature inside the gas accommodating chamber 111, and effectively reducing the risk of the static flashback. Through the corrugated burning mesh assembly 120, the contact area between the burning mesh assembly 120 and air is increased, and the heat dissipation effect of the burning mesh assembly 120 is enhanced, further reducing the risk of the static flashback.

In some embodiments, a plurality of flashback resistant assemblies 130 are provided. The plurality of flashback resistant assemblies 130 are arranged at each of two sides of the burning mesh assembly 120.

In the embodiments of the present disclosure, the flashback resistant assembly 130 located between the burning mesh assembly 120 and the main body 110 is configured to block the heat transfer to the gas accommodating chamber 111. The flashback resistant assembly 130 disposed at the side of the burning mesh assembly 120 facing away from the gas accommodating chamber 111 is configured to enhance the heat dissipation efficiency of the burning mesh assembly 120. In this way, the temperature inside the gas accommodating chamber 111 is effectively reduced, and the risk of the static flashback is effectively reduced.

In other embodiments, the plurality of flashback resistant assemblies 130 are provided and disposed between the burning mesh assembly 120 and the main body 110. Through heat insulation of the plurality of flashback resistant assemblies 130, the temperature inside the gas accommodating chamber 111 is further reduced, and the risk of the static flashback is effectively reduced.

In still other embodiments, the plurality of flashback resistant assemblies 130 are provided and disposed at the side of the burning mesh assembly 120 facing away from the gas accommodating chamber 111.

Through the plurality of flashback resistant assemblies 130, a heat dissipation area is increased, and the heat dissipation efficiency of the burning mesh assembly 120 is enhanced, effectively reducing the risk of the static flashback.

In some specific embodiments, the burner 100 comprises one burning mesh assembly 120 and two flashback resistant assemblies 130. One of the two flashback resistant assemblies 130 is disposed at the side of the burning mesh assembly 120 facing towards the gas accommodating chamber 111, and the other of the two flashback resistant assemblies 130 is disposed at the side of the burning mesh assembly 120 facing away from the gas accommodating chamber 111. In the embodiments of the present disclosure, the burner 100 has a simple structure, which effectively reduces the risk of the flashback.

In other specific embodiments, the burner 100 comprises two burning mesh assemblies 120 and one flashback resistant assembly 130. The two burning mesh assemblies 120 are arranged in parallel, and the flashback resistant assembly 130 is located between the two burning mesh assemblies 120. One of the two burning mesh assemblies 120 away from the gas accommodating chamber 111 is configured to burn the flames. The other burning mesh assembly 120 close to the gas accommodating chamber 111 has small mesh holes, thus reducing the risk of the flashback, and further improving the safety of the burner 100.

In still other embodiments, the burner 100 comprises two burning mesh assemblies 120 and two flashback resistant assemblies 130. In a direction away from the gas accommodating chamber 111, the two burning mesh assemblies 120 and the two flashback resistant assemblies 130 are stacked in sequence in an order of the burning mesh assembly 120, the flashback resistant assembly 130, the burning mesh assembly 120, and the flashback resistant assembly 130. In the embodiments of the present disclosure, not only is the stability of flame combustion improved and the risk of the flashback reduced , but also overall strength of the burner 100 is enhanced and the application reliability of the burner 100 is improved.

It should be understood that the burning mesh assembly 120 and the flashback resistant assembly 130 may also be provided in other quantities, and the present disclosure imposes no limitation thereon. It should be understood that the burning mesh assembly 120 and the flashback resistant assembly 130 may also be arranged in other manners, and nor does the present disclosure impose any limitation thereon.

As illustrated in FIG. 8, FIG. 15, and FIG. 16, in some embodiments, the main body 110 comprises the housing 112 and the deflector 113 connected to the housing 112. The gas accommodating chamber 111 is enclosed by the housing 112 and the deflector 113 . The deflector 113 has the plurality of deflector holes 114 configured to discharge the combustible gas in the gas accommodating chamber 111 to the burning mesh assembly 120. That is, the plurality of deflector holes 114 are outlets for the above gas.

In this embodiment, the structure of the main body 110 is limited. The main body 110 comprises the housing 112 and the deflector 113 connected to the housing 112. The gas accommodating chamber 111 is enclosed by the deflector 113 and the housing 112, and is configured to accommodate the certain amount of combustible gas. Further, the deflector 113 has the plurality of deflector holes 114. The combustible gas in the gas accommodating chamber 111 may flow to the burning mesh assembly 120 through the plurality of deflector holes 114, in such a manner that the combustible gas can burn on the burning mesh assembly 120, increasing the temperature of the burning mesh assembly 120, and thus enabling the burning mesh assembly 120 to radiate the thermal energy. The deflector hole 114 is configured to guide the flow of the combustible gas. Since the combustible gas flows to the burning mesh assembly 120 through the plurality of deflector holes 114, the rational design of the positions of the plurality of deflector holes 114 may allow the combustible gas to flow more uniformly to the burning mesh assembly 120, avoiding the uneven flame distribution at the various positions on the burning mesh assembly 120, and maintaining a uniform temperature at the various positions of the burning mesh assembly 120.

In some embodiments, the plurality of deflector holes 114 are uniformly arranged on the deflector 113.

In this embodiment, the positions of the plurality of deflector holes 114 are limited. Specifically, the plurality of deflector holes 114 are uniformly arranged on the deflector 113. Since the combustible gas flows to the burning mesh assembly 120 through the plurality of deflector holes 114, the plurality of deflector holes 114 are uniformly arranged on the deflector 113, which may allow the combustible gas to flow more uniformly to the burning mesh assembly 120, avoiding the uneven flame distribution at the various positions on the burning mesh assembly 120, and maintaining a uniform temperature at the various positions of the burning mesh assembly 120.

In some embodiments, the burner 100 further comprises the gas pipe 150 connected to the housing 112 and in communication with the gas accommodating chamber 111. The gas pipe 150 is configured to deliver the combustible gas into the gas accommodating chamber 111.

In this embodiment, the structure of the burner 100 is further limited. The burner 100 further comprises the gas pipe 150 configured to deliver the combustible gas into the gas accommodating chamber 111. Specifically, the gas pipe 150 is connected to the housing 112 and in communication with the gas accommodating chamber 111. The combustible gas flows into the gas accommodating chamber 111 through the gas pipe 150 to enable the burner 100 to operate normally.

In some embodiments, the gas pipe 150 extends into the gas accommodating chamber 111. The gas pipe 150 has a plurality of exhaust holes 151 formed on a surface of the gas pipe 150.

In this embodiment, a structure of the gas pipe 150 is further limited. Specifically, the gas pipe 150 extends into the gas accommodating chamber 111, and a portion of the gas pipe 150 located inside the gas accommodating chamber 111 has the plurality of exhaust holes 151. By extending the gas pipe 150 into the gas accommodating chamber 111 and providing the plurality of exhaust holes 151 for discharging the combustible gas at the surface of the gas pipe 150, the combustible gas can be discharged into the gas accommodating chamber 111 from the central area of the cavity, enabling the concentration of the combustible gas to tend to be balanced in all parts of the gas accommodating chamber 111. Thus, the combustible gas flows more uniformly to the burning mesh assembly 120, improving the uniformity of the flames on the burning mesh assembly 120.

It should be understood that the plurality of exhaust holes 151 may either be distributed at a peripheral wall of the gas pipe 150 or located at an end surface of the gas pipe 150, and the present disclosure imposes no limitation thereon.

In some specific embodiments, the gas pipe 150 is provided with a first splitter plate 152 at an end of the gas pipe 150 located in the gas accommodating chamber 111. The first splitter plate 152 closes an opening of the gas pipe 150 and has the plurality of exhaust holes 151 at the first splitter plate 152. The fuel gas is initially distributed through the plurality of exhaust holes 151 before entering the gas accommodating chamber 111. The fuel gas inside the gas accommodating chamber 111 is then secondarily distributed through the plurality of deflector holes 114 at the deflector plate 113 before flowing to the burning mesh assembly 120, which effectively improves the uniformity of the flame distribution at the burning mesh assembly 120.

In one possible embodiment, the burner 100 provided in the present disclosure is mainly composed of the burning surface (i.e., the burning mesh assembly 120 and the flashback resistant assembly 130), the air distribution plate (i.e., the deflector 113), the cavity (i.e., the gas accommodating chamber 111), and the ejector pipe (i.e., the gas pipe 150). The burning surface is mainly composed of a flame burning mesh assembly 120 (i.e., the burning mesh assembly 120) and a heat-insulating flashback resistant assembly 130 (i.e., the flashback resistant assembly 130).

The mixture of the fuel gas and air (i.e., the combustible gas) enters the cavity through the ejector pipe. After being thoroughly mixed inside the cavity, the mixture enters the burning surface uniformly through the air distribution plate. The flames burn on the flame burning mesh assembly 120 of the burning surface, and the heat-insulating flashback resistant assembly 130 serves to support the flame burning mesh assembly 120 and block partial heat. The temperature of the flames after burning exceeds 800°C, which is used to heat the flame burning mesh assembly 120 and generate the thermal radiation.

The flame burning mesh assembly 120 is located at an outer side of the heat-insulating flashback resistant assembly 130. After the fuel gas flow (i.e., the combustible gas) passes through the heat-insulating flashback resistant assembly 130, the fuel gas flow burns on the flame burning mesh assembly 120.

The flame burning mesh assembly 120 has a mesh structure made of high-temperature-resistant and corrosion-resistant metal, with a mesh count ranging from 40 to 200 and a thickness of the flame burning mesh assembly 120 ranging from 0.1 mm to 0.2 mm. The heat-insulating flashback resistant assembly 130 also has a mesh structure made of high-temperature-resistant and corrosion-resistant metal, with a mesh count ranging from 5 to 40 and a thickness of the heat-insulating flashback resistant assembly 130 ranging from 0.2 mm to 0.4 mm. A mesh hole size of a heat-insulating support is greater than a mesh hole size of the flame burning mesh assembly 120. A certain spacing is formed between the heat-insulating flashback resistant assembly 130 and the flame burning mesh assembly 120, and the spacing may range from 0.1 mm to 1 mm.

As illustrated in FIG. 11, the present disclosure further provides a cooking appliance comprising the burner 100 provided in the above technical solutions.

The cooking appliance 200 provided in the present disclosure comprises the burner 100 provided in the above technical solutions, and thus has all the beneficial effects of the burner 100 in the above technical solutions.

The cooking appliance 200 comprises a pizza oven.

Reference throughout this specification to "an embodiment", "some embodiments", "schematic embodiments", "an example", "a specific example", or "some examples" means that a particular feature, structure, material, or characteristic described in connection with the embodiment or example is comprised in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A burner, comprising:

   a main body comprising a gas accommodating chamber configured to accommodate a combustible gas;
   a burning mesh assembly, wherein an opening of the gas accommodating chamber faces towards the burning mesh assembly to enable the combustible gas to burn on a surface of the burning mesh assembly, and wherein the burning mesh assembly faces towards an outside to radiate thermal energy to the outside; and
   a flashback resistant assembly configured to prevent a flame on the burning mesh assembly from entering the gas accommodating chamber.

2. The burner according to claim 1, wherein the burning mesh assembly comprises a plurality of burning mesh holes, the burning mesh assembly being configured such that an equivalent diameter of the plurality of burning mesh holes is less than or equal to 0.8 mm, wherein in a thickness direction of the burning mesh assembly, the flashback resistant assembly is arranged side by side with the burning mesh assembly, the flashback resistant assembly satisfying at least one of the following conditions:

   the flashback resistant assembly is configured to have thermal insulation and is located between the burning mesh assembly and the main body; and
   the flashback resistant assembly is configured to perform heat exchange with the burning mesh assembly to dissipate heat from the burning mesh assembly.

3. The burner according to claim 1 or 2, wherein the flashback resistant assembly is located at a side of the burning mesh assembly facing towards the main body.

4. The burner according to any one of claims 1 to 3, further comprising a support mesh assembly mounted between the burning mesh assembly and the flashback resistant assembly and configured to support the burning mesh assembly.

5. The burner according to claim 4, wherein:

   the flashback resistant assembly is spaced apart from the support mesh assembly; and
   the support mesh assembly is spaced apart from the burning mesh assembly.

6. The burner according to claim 4 or 5, wherein the support mesh assembly comprises at least one support mesh, the at least one support mesh being made of metal material.

7. The burner according to claim 6, wherein a mesh count of the support mesh ranges from 5 to 40.

8. The burner according to claim 6 or 7, wherein a thickness of the support mesh ranges from 0.2 mm to 2 mm.

9. The burner according to any one of claims 2 to 8, wherein the burning mesh assembly is configured such that the equivalent diameter of each of the plurality of burning mesh holes is greater than or equal to 0.05 mm, and less than or equal to 0.3 mm.

10. The burner according to any one of claims 1 to 9, wherein the burning mesh assembly comprises at least one burning mesh, the at least one burning mesh being made of metal material.

11. The burner according to claim 10, wherein a mesh count of the burning mesh ranges from 40 to 200.

12. The burner according to claim 10 or 11, wherein a thickness of the burning mesh ranges from 0.1 mm to 0.5 mm.

13. The burner according to any one of claims 10 to 12, wherein a surface porosity of the burning mesh is greater than or equal to 40%.

14. The burner according to any one of claims 1 to 13, wherein the flashback resistant assembly comprises at least one flashback barrier mesh, the at least one flashback barrier mesh being made of metal material.

15. The burner according to claim 14, wherein a mesh count of the flashback barrier mesh ranges from 40 to 200.

16. The burner according to claim 14 or 15, wherein a thickness of the flashback barrier mesh ranges from 0.15 mm to 2 mm.

17. The burner according to any one of claims 14 to 16, wherein the flashback barrier mesh comprises a plurality of flashback prevention mesh holes, the flashback barrier mesh being configured such that an equivalent diameter of each of the plurality of flashback prevention mesh holes is greater than 0.8 mm, and less than or equal to 3 mm.

18. The burner according to any one of claims 2 to 17, wherein the flashback resistant assembly comprises a plurality of flashback prevention mesh holes, wherein a ratio of an equivalent diameter of the plurality of flashback prevention mesh holes to an equivalent diameter of the plurality of burning mesh holes ranges from 1 to 60.

19. The burner according to any one of claims 1 to 18, wherein the flashback resistant assembly is in point contact with the burning mesh assembly.

20. The burner according to any one of claims 1 to 19, wherein the flashback resistant assembly is a corrugated mesh.

21. The burner according to any one of claims 2 and 4 to 20, wherein a plurality of flashback resistant assemblies are provided, wherein:

the plurality of flashback resistant assemblies are arranged at each of two sides of the burning mesh assembly; or
the plurality of flashback resistant assemblies are located at a same side of the burning mesh assembly.

22. The burner according to any one of claims 1 to 13, the flashback resistant assembly is a heat-insulating material member filled between the burning mesh assembly and the main body.

23. The burner according to claim 22, wherein the flashback resistant assembly is thermal insulation cotton or quartz cotton.

24. The burner according to any one of claims 1 to 23, wherein the main body comprises:

a housing; and
a deflector connected to the housing, wherein the gas accommodating chamber is enclosed by the housing and the deflector, and wherein the deflector has a plurality of deflector holes configured to discharge the combustible gas in the gas accommodating chamber towards the burning mesh assembly.

25. The burner according to claim 24, wherein the plurality of deflector holes are uniformly arranged on the deflector.

26. The burner according to claim 24 or 25, further comprising a gas pipe connected to the housing and in communication with the gas accommodating chamber, the gas pipe being configured to deliver the combustible gas into the gas accommodating chamber.

27. The burner according to claim 26, wherein:

the gas pipe extends into the gas accommodating chamber; and

the gas pipe has a plurality of exhaust holes formed on a surface of the gas pipe.

28. A cooking appliance, comprising a burner according to any one of claims 1 to 27.

29. The cooking appliance according to claim 28, wherein the cooking appliance comprises a pizza oven.

FIG. 1

FIG. 2

FIG. 3

FIG. 4

Hot air generated
by combustion

Thermal energy
radiation

120

140

130

Flow direction of
combustible gas

111

FIG. 5

FIG. 6

FIG. 7

100

FIG. 8

FIG. 9

FIG. 10

FIG. 11

| Burning photograph | | | | | | |
|---|---|---|---|---|---|---|
| Description | Flashback occurs at the moment of ignition | Flashback occurs 20 seconds after ignition | Flashback occurs 4 minutes after heating up to 850℃ | Stable burning | Stable burning | Stable burning with uniform radiation | Stable burning with uniform radiation and higher radiation energy |
| | 2mm | 1.5mm | 1mm | 0.8mm | 0.75mm | 0.3mm | 0.05mm |

Equivalent hole diameter of burning zone

FIG. 12

FIG. 13

FIG. 14

A

111

152

150

FIG. 15

A

120

130

113

112

111

FIG. 16

FIG.17

## INTERNATIONAL SEARCH REPORT

| | International application No. |
| --- | --- |
| | **PCT/CN2024/122032** |

**A. CLASSIFICATION OF SUBJECT MATTER**

F23D14/14(2006.01)i; F23D 14/02(2006.01)i; F23D14/82(2006.01)i; A47J37/06(2006.01)i; A47J36/30(2006.01)i

According to International Patent Classification (IPC) or to both national classification and IPC

**B. FIELDS SEARCHED**

Minimum documentation searched (classification system followed by classification symbols)

 IPC:F23D14

Documentation searched other than minimum documentation to the extent that such documents are included in the fields searched

Electronic data base consulted during the international search (name of data base and, where practicable, search terms used)

 CNTXT, CNKI, DWPI, VEN: 燃烧器, 辐射, 回火, 网, 直径, 支撑, burner?, radiat+, back w fire, net, prevent+, avoid+, diameter, support

**C. DOCUMENTS CONSIDERED TO BE RELEVANT**

| Category* | Citation of document, with indication, where appropriate, of the relevant passages | Relevant to claim No. |
| --- | --- | --- |
| PX | CN 221285463 U (GUANGDONG MIDEA KITCHEN APPLIANCES MANUFACTURING CO., LTD. et al.) 09 July 2024 (2024-07-09)<br>claims 1-14, description, paragraphs [0060]-[0108], and figures 1-3 | 1, 3-12, 14-16, 21, 24-29 |
| PX | US 2023349550 A1 (UT-BATTELLE, LLC) 02 November 2023 (2023-11-02)<br>description, paragraphs [0047]-[0088], and figures 1-23 | 1-29 |
| X | US 5240411 A (MOR-FLO INDUSTRIES, INC.) 31 August 1993 (1993-08-31)<br>description, column 3, line 45 to column 9, line 15, and figures 1-12 | 1, 3, 10-11, 13-14, 19-20, 22-27 |
| Y | US 5240411 A (MOR-FLO INDUSTRIES, INC.) 31 August 1993 (1993-08-31)<br>description, column 3, line 45 to column 9, line 15, and figures 1-12 | 2, 4-9, 12, 15-18, 21, 28-29 |
| Y | US 2006003279 A1 (BEST WILLIE H.) 05 January 2006 (2006-01-05)<br>description, paragraphs [0044]-[0096], and figures 1-21 | 2, 9, 12, 15-18, 21, 28-29 |
| Y | US 2021048191 A1 (POLIDORO S.P.A.) 18 February 2021 (2021-02-18)<br>description, paragraphs [0022]-[0041], and figures 1-7 | 4-8 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 January 2025** | **09 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/122032** |

### C. DOCUMENTS CONSIDERED TO BE RELEVANT

| Category* | Citation of document, with indication, where appropriate, of the relevant passages | Relevant to claim No. |
|---|---|---|
| A | CN 113007708 A (GUANGDONG MIDEA KITCHEN APPLIANCES MANUFACTURING CO., LTD. et al.) 22 June 2021 (2021-06-22)<br>entire document | 1-29 |
| A | US 2021172597 A1 (UTILIZATION TECHNOLOGY DEVELOPMENT, NFP) 10 June 2021 (2021-06-10)<br>description, paragraphs [0021]-[0027], and figures 1-7 | 1-29 |
| A | CN 205137449 U (GUANGZHOU HUAWEISHENG HARDWARE PRODUCT CO., LTD.) 06 April 2016 (2016-04-06)<br>entire document | 1-29 |
| A | KR 101040394 B1 (LEE SUNG CO., LTD.) 09 June 2011 (2011-06-09)<br>description, paragraphs [0012]-[0020], and figures 1-7 | 1-29 |
| A | KR 20010090393 A (FIBER TECH CO., LTD.) 18 October 2001 (2001-10-18)<br>description, paragraphs [0010]-[0035], and figures 1-4 | 1-29 |
| A | US 2016363316 A1 (KYUNGDONG NAVIEN CO., LTD. et al.) 15 December 2016 (2016-12-15)<br>entire document | 1-29 |
| A | US 2020191389 A1 (BEST WILLIE H.) 18 June 2020 (2020-06-18)<br>entire document | 1-29 |

Form PCT/ISA/210 (second sheet) (July 2022)

## INTERNATIONAL SEARCH REPORT
### Information on patent family members

International application No.

**PCT/CN2024/122032**

| Patent document cited in search report | | | Publication date (day/month/year) | Patent family member(s) | | | Publication date (day/month/year) |
|---|---|---|---|---|---|---|---|
| CN | 221285463 | U | 09 July 2024 | None | | | |
| US | 2023349550 | A1 | 02 November 2023 | None | | | |
| US | 5240411 | A | 31 August 1993 | None | | | |
| US | 2006003279 | A1 | 05 January 2006 | EP | 1779038 | A2 | 02 May 2007 |
| | | | | EP | 1779038 | B1 | 12 March 2014 |
| | | | | WO | 2006080949 | A2 | 03 August 2006 |
| | | | | WO | 2006080949 | A9 | 31 August 2006 |
| | | | | WO | 2006080949 | A3 | 08 March 2007 |
| | | | | EP | 1776028 | A1 | 25 April 2007 |
| | | | | EP | 1776028 | B1 | 08 October 2008 |
| | | | | CA | 2571395 | A1 | 03 August 2006 |
| | | | | CA | 2571395 | C | 16 August 2011 |
| | | | | DE | 602005010263 | D1 | 20 November 2008 |
| | | | | WO | 2006009932 | A1 | 26 January 2006 |
| | | | | CA | 2571545 | A1 | 26 January 2006 |
| | | | | CA | 2571545 | C | 27 March 2012 |
| | | | | US | 7726967 | B2 | 01 June 2010 |
| | | | | ATE | 410105 | T1 | 15 October 2008 |
| | | | | US | 2006021517 | A1 | 02 February 2006 |
| | | | | US | 7853129 | B2 | 14 December 2010 |
| US | 2021048191 | A1 | 18 February 2021 | JP | 2019531450 | A | 31 October 2019 |
| | | | | JP | 6869996 | B2 | 12 May 2021 |
| | | | | WO | 2019021224 | A1 | 31 January 2019 |
| | | | | CL | 2018002033 | A1 | 23 November 2018 |
| | | | | WO | 2019021039 | A1 | 31 January 2019 |
| | | | | US | 11215358 | B2 | 04 January 2022 |
| | | | | CA | 3017011 | A1 | 28 January 2019 |
| | | | | CA | 3017011 | C | 24 November 2020 |
| | | | | KR | 20190038749 | A | 09 April 2019 |
| | | | | KR | 102314411 | B1 | 20 October 2021 |
| | | | | MX | 2018010398 | A | 02 December 2019 |
| CN | 113007708 | A | 22 June 2021 | None | | | |
| US | 2021172597 | A1 | 10 June 2021 | None | | | |
| CN | 205137449 | U | 06 April 2016 | None | | | |
| KR | 101040394 | B1 | 09 June 2011 | None | | | |
| KR | 20010090393 | A | 18 October 2001 | KR | 100361731 | B1 | 23 November 2002 |
| US | 2016363316 | A1 | 15 December 2016 | KR | 20150100312 | A | 02 September 2015 |
| | | | | KR | 101560082 | B1 | 13 October 2015 |
| | | | | EP | 3112752 | A1 | 04 January 2017 |
| | | | | EP | 3112752 | A4 | 04 October 2017 |
| | | | | JP | 2017505422 | A | 16 February 2017 |
| | | | | JP | 6378784 | B2 | 22 August 2018 |
| | | | | US | 10151478 | B2 | 11 December 2018 |
| | | | | WO | 2015130058 | A1 | 03 September 2015 |
| US | 2020191389 | A1 | 18 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311272516
- CN 202311272286
- CN 202322653402
- CN 113701155 B
- CN 117091131 A
- CN 109716023 A